# EUROPÄISCHE PATENTSCHRIFT

(11) **EP 1 101 960 B1**
(45) Veröffentlichungstag und Bekanntmachung des Hinweises auf die Patenterteilung: **18.02.2004**
(21) Anmeldenummer: 00124603.2
(22) Anmeldetag: 10.11.2000
(51) Int. Cl.: F16C 13/00, D21G 1/02

(54) **Walze und Kalander**
Roll and calender
Rouleau et calandre

(30) Priorität: 20.11.1999 DE 19955862
(43) Veröffentlichungstag der Anmeldung: 23.05.2001
(73) Patentinhaber: Voith Paper Patent GmbH, 89522 Heidenheim (DE)
(72) Erfinder: Wenzel, Reinhard, 47803 Krefeld (DE); Dornfeld, Peter, 47803 Krefeld (DE)
(74) Vertreter: Knoblauch, Andreas, Dr.-Ing.

(56) Entgegenhaltungen:
- DE-A- 3 604 839
- DE-A- 3 611 859
- DE-A- 3 936 048
- US-A- 5 785 636

## Beschreibung

Die Erfindung betrifft eine Walze mit einem Walzenmantel, der über einen Lagerring drehbar auf einer undrehbar gehaltenen Achse abgestützt ist, wobei der Lagerring gegenüber der Achse parallel zu einer Radialrichtung bewegbar ist, und mit einer Verriegelungseinrichtung, die eine radiale Hubbewegung frei gibt oder blokkiert. Ferner betrifft die Erfindung einen Kalander mit einer derartigen Walze und mit einer Nachbarwalze, die mit der Walze einen Nip bildet, sowie mit mindestens einer weiteren Walze, wobei die Nachbarwalze und die weiteren Walzen in Pressenrichtung verlagerbar sind.

Eine derartige Walze ist aus DE 36 04 839 C2 bekannt. Die Verriegelungseinrichtung ist hierbei als halbmondoder sichelförmiger Keil ausgebildet, der in einen Spalt zwischen dem Walzenmantel und der Achse eingeschoben werden kann, wenn sich der Walzenmantel in einer vollständig angehobenen oder vollständig abgesenkten Position gegenüber der Achse befindet.

In vielen Kalandern werden als obere und als untere Endwalze Biegeeinstellwalzen eingesetzt. Diese beiden Biegeeinstellwalzen sind aber von unterschiedlichen Typen, die üblicherweise als K- und als F-Typ bezeichnet werden, d.h. die eine Walze ist als Walze mit Mantelhub ausgebildet. Bei dieser Walze läßt sich der Walzenmantel in einer Radialrichtung relativ zur Achse bewegen. Bei der anderen Walze ist jedoch der Walzenmantel in Radialrichtung auf der Achse festgelegt. Dies hat zur Folge, daß man auch zwei unterschiedliche Reservewalzen auf Lager haben muß. Aus diesem Grund ist in der oben erwähnten DE 36 04 839 C2 eine Möglichkeit vorgesehen worden, wie man mit einer einzigen Reservewalze beide Walzentypen realisieren kann. Um die Walze von einem Walzentyp, beispielsweise mit Mantelhub, auf den anderen Walzentyp ohne Mantelhub umzurüsten, sind jedoch einige Montagemaßnahmen erforderlich. Dies ist insbesondere bei Kalandern, die online stehen, relativ unpraktisch und gefährlich. Vor allem ist der Umrüstaufwand relativ hoch.

Der Erfindung liegt die Aufgabe zugrunde, eine Änderung der Betriebsart von einer Walze mit Mantelhubfähigkeit zu einer Walze mit festgelegtem Mantel zu vereinfachen.

Diese Aufgabe wird bei einer Walze der eingangs genannten Art dadurch gelöst, daß die Verriegelungseinrichtung ein verdrehbares Teil mit einer länglichen Öffnung aufweist, das in eine erste Drehstellung, in der die längliche Öffnung parallel zur Hubbewegungsrichtung ausgerichtet ist, und eine zweite Drehstellung, in der die Hubbewegung blockiert ist, verdrehbar ist.

Mit dieser Ausgestaltung ist eine Änderung des Betriebsverhaltens von einer Walze mit Mantelhubfähigkeit zu einer Walze, bei der Mantel auf der Achse festgelegt ist, oder umgekehrt, ohne weitere Umbaumaßnahmen möglich. Es ist lediglich erforderlich, das verdrehbare Teil der Verriegelungseinrichtung entsprechend zu verdrehen. In einer Drehstellung stellt die längliche Öffnung einen Bewegungspfad zur Verfügung, in dem die Achse relativ zum Walzenmantel bewegt werden kann. In der anderen Drehstellung ist hingegen die längliche Öffnung so ausgerichtet, daß dieser Bewegungspfad nicht mehr zur Verfügung steht. Wenn man die Achse relativ zum Walzenmantel seitlich, also quer zur Richtung der Hubbewegung relativ zur Achse fixiert, dann ist der Walzenmantel in dieser Drehstellung des verdrehbaren Teils mit einer relativ hohen Genauigkeit auf der Achse fixiert. Üblicherweise wird man das verdrehbare Teil zwischen der ersten und der zweiten Drehstellung um etwa 90° verdrehen. Dies ist jedoch nicht zwingend. Auch ist es denkbar, mehr als ein verdrehbares Teil einzusetzen, solange die Bedingung erfüllt ist, daß eine längliche Öffnung in einer Drehstellung die Hubbewegung der Achse im Walzenmantel oder des Walzenmantels relativ zur Achse erlaubt, während diese Hubbewegung in der anderen Drehstellung unterbunden ist.

Vorzugsweise ist das verdrehbare Teil durch den Lagerring gebildet oder mit ihm gemeinsam bewegbar. Dies erleichtert die Fertigung und auch die Handhabung. Der Lagerring ist relativ zum Walzenmantel ohnehin verdrehbar. Diesbezüglich sind also keine weiteren Vorkehrungen zu treffen. Die einzige zusätzliche Aufgabe besteht darin, den Lagerring auch gegenüber der Achse verdrehbar zu machen, um die längliche Öffnung entweder in Ausrichtung mit der Hubbewegungsrichtung zu bringen oder sie daraus zu entfernen.

Vorzugsweise ist das verdrehbare Teil um die Rotationsachse des Walzenmantels verdrehbar. Dies vereinfacht die Bewegungssteuerung und den konstruktiven Aufbau weiter.

Vorzugsweise weist die längliche Öffnung an ihren Längskanten konkav gewölbte Abschnitte auf, deren Krümmungsradius dem Radius der Achse in diesem Bereich entspricht, wobei die Achse im Bereich des verdrehbaren Teils abgeflachte Abschnitte aufweist, die sich parallel zur Bewegungsrichtung erstrecken. Die konkav gewölbten Abschnitte können dazu verwendet werden, das verdrehbare Teil an der Achse abzustützen, wenn sich das verdrehbare Teil in Blockierungsstellung befindet. In diesem Fall umschließt das verdrehbare Teil die Achse und liegt mit den gewölbten Abschnitten am Umfang der Achse an. Auch wenn die Anlage nicht über den gesamten Umfang der Achse erfolgt, so reicht die Lagerung in den meisten Fällen aus.

Vorzugsweise ist der Abstand zwischen den abgeflachten Abschnitten genauso groß wie die lichte Breite der länglichen Öffnung. Die längliche Öffnung dient damit auch gleichzeitig als Führung des verdrehbaren Teiles gegenüber der Achse bei der Hubbewegung.

Vorteilhafterweise liegen auf den abgeflachten Abschnitten Gleitstücke mit einer ebenen Unterseite auf, deren Oberseite zumindest auf einem Teil der axialen Länge die gleiche Krümmung wie die Achsen im Bereich des verdrehbaren Teils aufweisen. Auf diesem Teil der axialen Länge bildet also die Gesamtheit aus Achse und Gleitstücken eine Zylindermantelfläche, so daß sich das verdrehbare Teil in jeder Drehposition auf einem entsprechenden Zylindermantelflächenabschnitt abstützen kann. Das verdrehbare Teil ist somit auch dann zuverlässig gehalten, wenn der Walzenmantel eine Hubbewegung gegenüber der Achse durchführt.

Hierbei ist bevorzugt, daß die Gleitstücke einen radial vorstehenden Vorsprung mit mindestens einer Stützfläche aufweisen, die in Axialrichtung mit einer entsprechenden Gegenfläche am verdrehbaren Teil zusammenwirkt. Damit wird eine axiale Fixierung des verdrehbaren Teils gegenüber der Achse bzw. den Gleitstücken erreicht.

Vorzugsweise taucht der Vorsprung in eine Innennut am verdrehbaren Teil ein. Damit ist das Gleitstück in beide axiale Richtungen gegenüber dem verdrehbaren Teil fixiert.

Vorzugsweise ist das verdrehbare Teil an der radialen Außenseite der Vorsprünge abgestützt. Damit ergibt sich eine weitere Abstützmöglichkeit des verdrehbaren Teiles, die insbesondere dann von Vorteil ist, wenn der Walzenmantel gegenüber der Achse fixiert ist. In diesem Fall kann nämlich das verdrehbare Teil mindestens an insgesamt vier Positionen gegenüber der Achse abgestützt werden. Auch wenn aufgrund von Belastungen gelegentlich die ein oder andere Abstützung weniger oder gar nicht wirkt, wird mit dieser Ausgestaltung eine sehr stabile Abstützung erreicht.

Vorzugsweise ist die Walze als Durchbiegungsausgleichswalze ausgebildet. Derartige Walzen können von der Mantelhubeigenschaft am besten Gebrauch machen.

Auch ist von Vorteil, daß die Achse im Bereich des verdrehbaren Teils einen verminderten Durchmesser aufweist. Damit steht genügend Platz zur Verfügung, um das verdrehbare Teil unterzubringen, ohne daß der Durchmesser des Walzenmantels übermäßig vergrößert werden muß.

Die Aufgabe wird auch bei einem Kalander der eingangs genannten Art gelöst und zwar dadurch, daß Mittel vorgesehen sind, die die Verlagerbarkeit der Nachbarwalze wahlweise blockieren oder freigeben.

Mit einer derartigen Ausgestaltung hat man einerseits die Möglichkeit, den Kalander mit allen Nips zu betreiben. In diesem Fall ist der Mantel gegenüber der Achse festgelegt. Die Verlagerbarkeit des Mantels ist also blockiert. Die Nachbarwalze ist hingegen frei verlagerbar, was unter anderem zum Öffnen der Nips wichtig ist. Ein Öffnen benötigt man beispielsweise zum Einführen einer Materialbahn. Möchte man hingegen den Kalander nur mit einem Nip betreiben, d.h. mit dem Nip zwischen der Walze, deren Mantelhubfunktion aktivierbar oder deaktivierbar ist, und der Nachbarwalze dann wird die Nachbarwalze so festgelegt, daß sie sich nicht mehr verlagern kann. Die übrigen Walzen des Kalanders können hingegen so verlagert werden, daß die von ihnen begrenzten Nips geöffnet sind. Um nun auch den Nip zwischen der Walze und der Nachbarwalze öffnen zu können, wird die Mantelhubfunktion der Walze aktiviert. Der Nip wird also dadurch geöffnet, daß der Mantel der Walze mit Mantelhubfunktion gegenüber der Achse verlagert wird. Damit erhält man eine relativ große Freiheit bei der Wahl der Betriebsmöglichkeiten des Kalanders.

Vorzugsweise ist die Nachbarwalze über einen Hebel in einer Stuhlung gelagert, wobei die Mittel eine Schwenkbewegung des Hebels relativ zur Stuhlung blockieren. Dies ist eine relativ einfache Maßnahme, um die Verlagerbarkeit der Walze zu blockieren oder frei zu geben. Im einfachsten Fall reicht ein Steckbolzen aus, den man durch den Hebel und die Stuhlung führt, um die Nachbarwalze in der Stuhlung festzulegen.

Bevorzugterweise weisen die Mittel eine Überlastsicherung auf. Die Überlastsicherung verhindert, daß in Situationen, wo zu große Kräfte auftreten, Beschädigungen erfolgen können. Wenn beispielsweise die Kräfte von der Walze mit Mantelhub auf die Nachbarwalze zu groß werden und somit die Gefahr besteht, daß der Walzenmantel einer dieser beiden Walzen beschädigt wird, dann löst die Überlastsicherung aus und gibt die Nachbarwalze frei. Die Überlastsicherung kann im einfachsten Fall durch den Bolzen gebildet werden, der zum Festlegen des Hebels in der Stuhlung dient. Man kann einen derartigen Bolzen so dimensionieren, daß er beim Auftreten zu großer Kräfte abschert. Natürlich sind auch andere Mittel möglich, beispielsweise hydraulische Kolben-Zylinder-Einheiten oder ähnliches.

Vorzugsweise ist die Verriegelungseinrichtung so ausgebildet, wie im Zusammenhang mit der Walze beschrieben. Dies vereinfacht die Umstellung.

Die Erfindung wird im folgenden anhand von bevorzugten Ausführungsbeispielen in Verbindung mit der Zeichnung näher beschrieben. Hierin zeigen:
- Fig. 1: einen Längsschnitt durch eine Walze,
- Fig. 2: einen vergrößerten Längsschnitt im Ausschnitt zur Darstellung eines Lagerrings,
- Fig. 3: einen Schnitt III-III nach Fig. 2,
- Fig. 4: einen Schnitt IV-IV nach Fig. 2,
- Fig. 5: einen Schnitt V-V nach Fig. 2 mit einer Zwischenstellung,
- Fig. 6: die Ansicht nach Fig. 5 in einer Betriebsstellung,
- Fig. 7: die Ansicht nach Fig. 5 in einer anderen Betriebsstellung,
- Fig. 8: eine Darstellung zur Erläuterung des erfindungsgemäßen Prinzips und
- Fig. 9: einen Kalander in verschiedenen Betriebsarten.

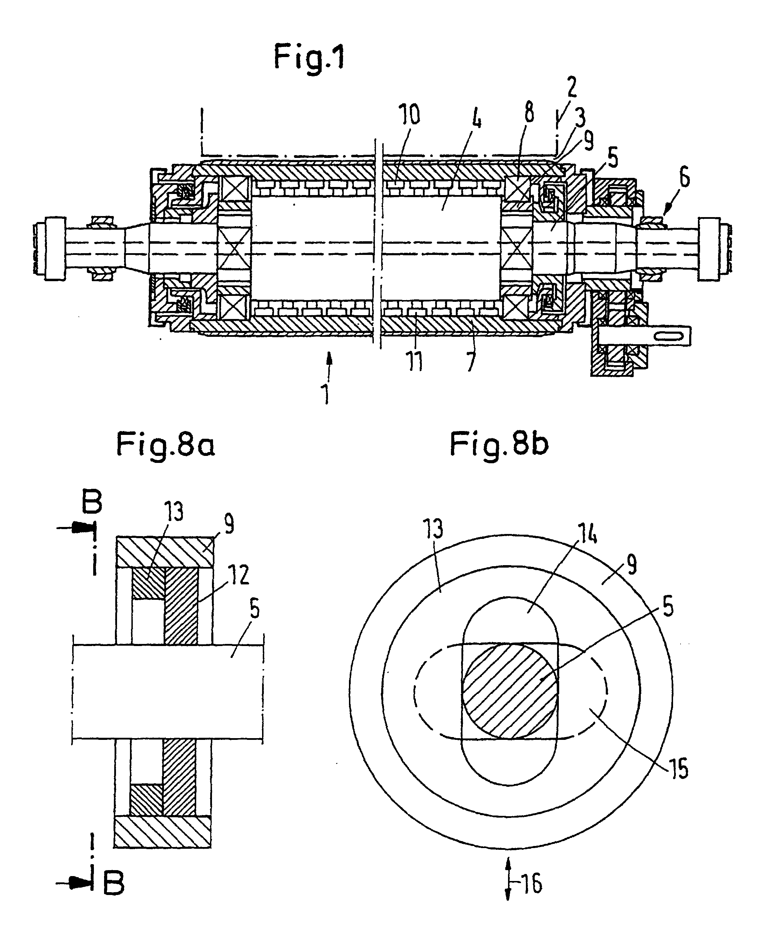

Fig. 1 zeigt eine durchbiegungsgesteuerte Walze 1, die mit einer strichpunktiert dargestellten Gegenwalze 2 zusammenwirken kann, um eine Materialbahn, beispielsweise eine Papierbahn, in einem Nip 3 zwischen den beiden Walzen mit Druck und gegebenenfalls auch erhöhter Temperatur zu beaufschlagen.

Die Walze 1 weist hierbei eine Achse 4 auf, die an ihren axialen Enden Achszapfen 5 mit vermindertem, gegebenenfalls gestuftem Durchmesser aufweist. Mit den Achszapfen 5 ist die Walze 1 über Kalottenlager 6 in einer nicht näher dargestellten Stuhlung gelagert.

Die Walze weist ferner einen Walzenmantel 7 auf, der über ein Lager 8 im Bereich seiner axialen Enden jeweils auf einem Lagerring 9 gelagert ist.

Der Walzenmantel 7 ist gegenüber der Achse 4 mit einer ersten Reihe von Stützelementen, beispielsweise hydrostatischen Stützelementen 10, nach oben, und mit einer zweiten Reihe von Stützelementen 11 nach unten abgestützt. In an sich bekannter Weise läßt sich durch eine entsprechende Ansteuerung der einzelnen Stützelemente eine Einstellung der Durchbiegung des Walzenmantels 7 erreichen. Darüber hinaus können diese Stützelemente 10, 11 bei einigen Walzentypen dazu verwendet werden, den Walzenmantel 7 insgesamt gegenüber der Achse 4 anzuheben oder abzusenken.

Um dies zu erreichen, ist der Lagerring 9 gegenüber der Achse 4 parallel zur einer Radialrichtung der Achse 4 verlagerbar. Dies ist in der Darstellung der Fig. 1 die Pressenrichtung, also eine Richtung parallel zur Zeichenebene nach oben oder nach unten.

Andererseits möchte man die Walze 1 aber auch in einem Zustand betreiben können, in dem der Walzenmantel 7 in Bezug auf die Achse 4 festliegt. Vorzugsweise sollte der Walzenmantel 7 in diesem Zustand konzentrisch zur Achse 4 liegen.

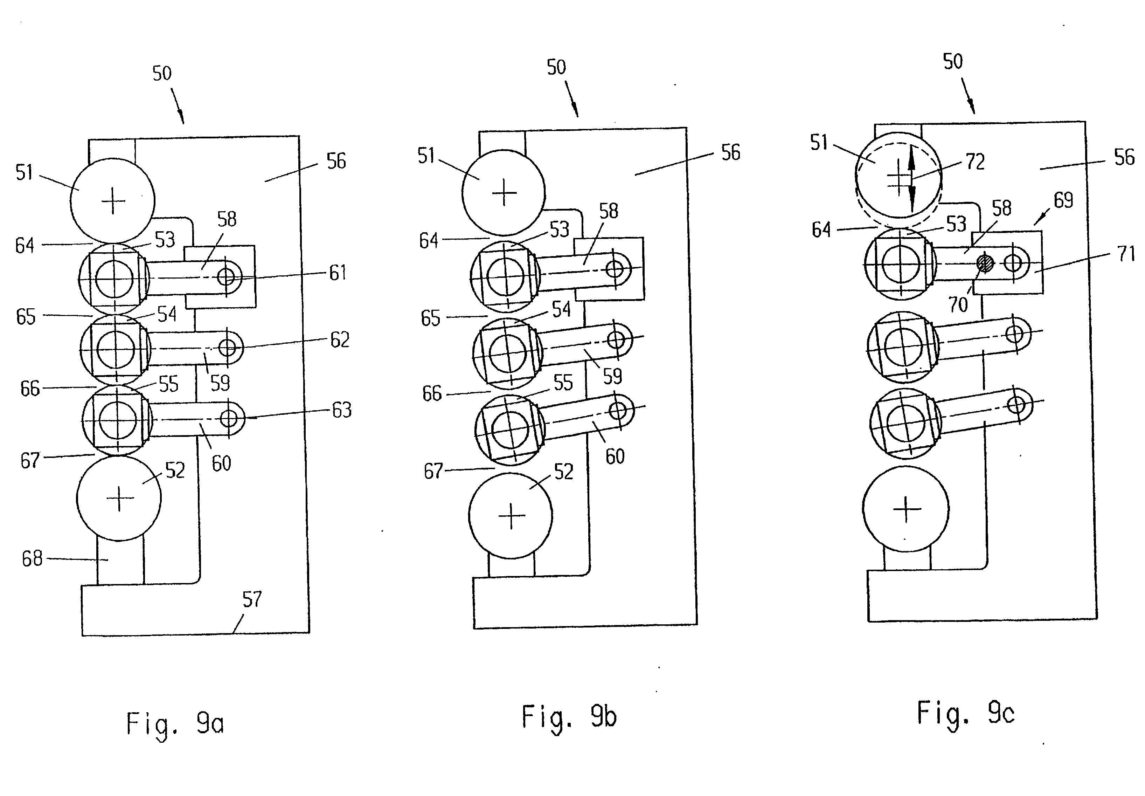

Um dies zu erreichen, ist eine Verriegelungseinrichtung vorgesehen, die im Prinzip in Fig. 8 dargestellt ist. Dort ist lediglich der Lagerring 9 und der Achszapfen 5 sowie die zur Verriegelung notwendigen Teile dargestellt.

Die Fig. 8b zeigt hierbei eine Schnittansicht B-B nach Fig. 8a.

Die Verriegelungseinrichtung weist eine erste Scheibe 12 und eine zweite Scheibe 13 auf. Die Scheibe 13 ist fest im Lagerring 9 angeordnet und weist als Führungsöffnung ein Langloch 14 auf, dessen lichte Breite dem Durchmesser des Achszapfens 5 entspricht und dessen Höhe oder Länge dem gewünschten Walzenhub entspricht. Die Scheibe 12 weist ein entsprechendes Langloch 15 auf. Die Scheibe 12 ist gegenüber der Scheibe 13 verdrehbar.

In der in Fig. 8b dargestellten Drehposition ist der Achszapfen 5 durch das Zusammenwirken der beiden Langlöcher 14, 15 gehalten. Der Lagerring 9 kann sich also in Pressenrichtung 16 nicht bewegen. Wird hingegen die Scheibe 12 um 90° gegenüber der Scheibe 13 gedreht, dann kommen die beiden Langlöcher 14, 15 miteinander in Überdeckung, so daß sich der Walzenzapfen 5 relativ zum Lagerring 9 in Pressenrichtung bewegen kann. Die notwendigen Hubkräfte können hierbei über die Stützelemente 10, 11 aufgebracht werden.

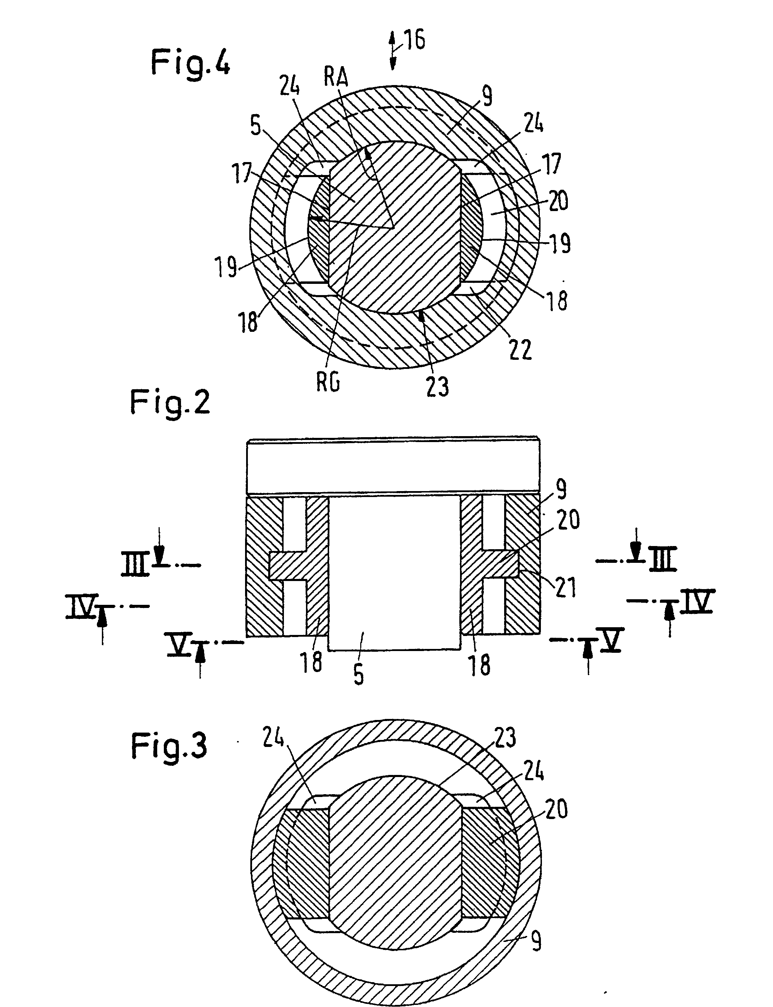

Die Fig. 2 bis 4 zeigen nun eine Möglichkeit, dieses Prinzip zu realisieren.

Der Achszapfen 5 weist im Bereich des Lagerringes zwei abgeflachte Abschnitte 17 auf, die sich parallel zur Pressenrichtung 16 erstrecken. Auf diesen Abschnitten 17 sind Gleitstücke 18 angeordnet, die mit ihrer ebenen Unterseite auf den abgeflachten Abschnitten 17 aufliegen. Im übrigen weisen sie eine konvex gekrümmte Oberfläche 19 auf, deren Krümmungsradius RG praktisch gleich dem Krümmungsradius RA des Achszapfens 5 ist. In der in Fig. 4 dargestellten Position der Gleitstücke 18 bildet die Oberfläche 19 der Gleitstücke 18 zusammen mit den nicht abgeflachten Bereichen des Achszapfens 5 eine Zylindermantelfläche.

Die Gleitstücke 18 weisen etwa in ihrer axialen Mitte jeweils einen Vorsprung 20 auf, dessen Umfangsfläche ebenfalls einer Zylindermantelfläche folgt.

Dieser Vorsprung taucht ein in eine umlaufende Nut 21, die im Lagerring 9 ausgebildet ist. Der Lagerring ist hierbei scheibenartig ausgebildet und übernimmt somit die Funktion der Scheibe 12 nach Fig. 8. Der Vorsprung 20 liegt hierbei in jeder Drehstellung des Lagerrings 9 gegenüber den Gleitstücken 18 in der Nut 21, so daß der Lagerring 9 sowohl in beide axiale Richtungen gegenüber den Gleitstücken 18 fixiert ist als auch in radialer Richtung auf den Gleitstücken abgestützt ist.

Der Lagerring 9 weist eine längliche Öffnung 22 auf, die dadurch gebildet ist, daß eine zentrische Bohrung 23 mit Freistellungen 24 erweitert wird. Die beiden Freistellungen 24 liegen einander diametral gegenüber. Ihre Breite entspricht im wesentlichen dem Abstand zwischen den beiden Abschnitten 17 des Achszapfens 5. Aufgrund der verbleibenden Abschnitte der Bohrung 23 ist der Lagerring 9 aber nicht nur auf dem Achszapfen 5 frei verdrehbar, er ist auch immer mit diesen Abschnitten der Bohrung 23 auf der Zylindermantelfläche abgestützt, die durch die Umfangsfläche des Achszapfens 5 oder der Gleitstücke 17 gebildet ist.

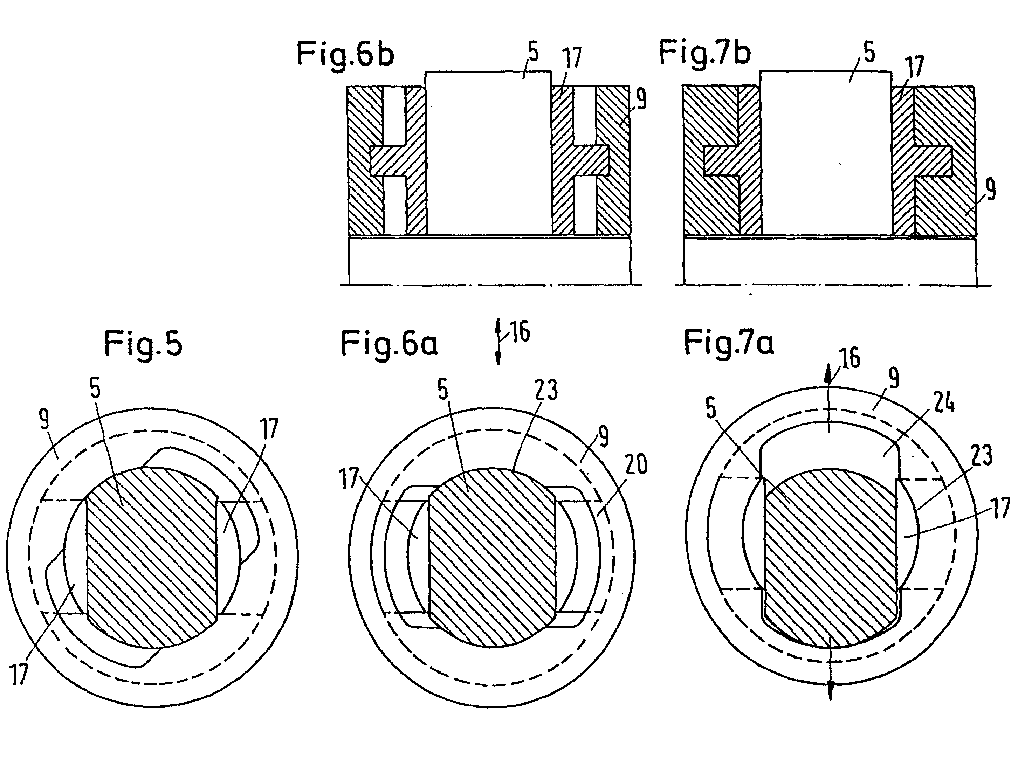

Wie aus Fig. 5 zu erkennen ist, läßt sich der Lagerring 9 nun gegenüber dem Achszapfen 5 verdrehen. In der in Fig. 5 dargestellten Drehwinkelstellung ist der Lagerring 9 teilweise auf dem Achszapfen 5 und teilweise auf dem Umfang der Gleitstücke 17 abgestützt.

Fig. 6a zeigt nun eine Position, die der der Fig. 2 bis 4 entspricht. Der Lagerring 9 liegt mit der Bohrung 23 auf dem Achszapfen 5 auf. Damit ist der Lagerring 9 gegenüber dem Achszapfen 5 fixiert. Die Gleitstücke 17 sind ebenfalls festgelegt, weil der Vorsprung 20 in der Nut 21 gehalten ist. Wird hingegen, wie in Fig. 7 dargestellt, der Lagerring gegenüber dem Achszapfen 5 um 90° verdreht, dann stützt sich der Lagerring mit der Bohrung 23 auf der Oberfläche der Gleitstücke 17 ab. Die Freistellungen 24 kommen in Überdeckung mit dem nicht von den Gleitstücken 17 abgedecktem Bereich des Achszapfens 5. Dementsprechend steht nun ein Bewegungsraum für den Achszapfen 5 im Gleitring 9 oder für den Gleitring 9 auf dem Achszapfen 5 zur Verfügung, so daß der Lagerring 9 in Richtung des Doppelpfeils 16 gegenüber dem Achszapfen 5 verschoben werden kann.

In der in Fig. 7 dargestellten Drehstellung des Lagerrings 9 gegenüber dem Achszapfen 5 ist die Walze 1 eine Mantelhubwalze. In der in Fig. 6 dargestellten Drehstellung hat die Walze 1 keine Mantelhubfunktion. Umbaumaßnahmen, um von einer Funktion zur anderen zu gelangen, sind nicht erforderlich. Es ist lediglich erforderlich, den Lagerring 9 gegenüber dem Achszapfen 5 zu verdrehen. Gegenüber dem Walzenmantel 7 ist der Lagerring 9 ohnehin verdrehbar.

Fig. 9 zeigt einen Kalander 50 mit einer Oberwalze 51, einer Unterwalze 52, einer zur Oberwalze 51 benachbarten Nachbarwalze 53 und weiteren Walzen 54, 55. Alle Walzen sind in einer Stuhlung 56 angeordnet. Die Unterwalze 52 kann gegebenenfalls auch auf dem Fußboden 57 stehen, wenn dieser nicht Bestandteil der Stuhlung 56 ist.

Die Oberwalze 51 und die Unterwalze 52 sind als Durchbiegungseinstellwalzen ausgebildet. Sie haben beide eine Mantelhubfähigkeit, wobei zumindest bei der Oberwalze 51 der Mantelhub blockiert werden kann, wie dies im Zusammenhang der Fig. 1 bis 8 dargestellt ist. Die zwischen der Oberwalze 51 und der Unterwalze 52 angeordneten Walzen 53, 54, 55 sind über Hebel 58, 59, 60 in der Stuhlung gelagert, wobei die Hebel um Drehpunkte 61, 62, 63 verschwenkbar sind.

Fig. 9a zeigt einen Betriebszustand, bei dem alle Nips 64, 65, 66, 67 zwischen den Walzen 51-55 geschlossen sind. Eine nicht näher dargestellte Materialbahn, beispielsweise eine Papierbahn kann durch diese Nips 64-67 geführt werden, um mit Druck und gegebenenfalls auch mit erhöhter Temperatur beaufschlagt zu werden. Hierbei ist der Walzenmantel der Oberwalze 51 festgelegt. Der Druck wird über die Unterwalze 52 aufgebracht, die zu diesem Zweck angehoben wird. Das Anheben kann, wie gesagt, über den Mantelhub erfolgen. Es ist aber auch möglich, daß die Unterwalze 52 in einer Halterung 68 gelagert ist, die höhenveränderbar ist, beispielsweise einer Kolben-Zylinder-Einheit.

Fig. 9b zeigt einen Zustand des Kalanders 50, bei dem alle Nips 64-67 geöffnet sind. Hierzu ist die Unterwalze 52 abgesenkt werden und die Oberwalze 51 verbleibt stationär. Das Öffnen der Nips 64-67 ist erforderlich, um eine Materialbahn einführen zu können. Aufgrund der Schwenkmöglichkeiten der Hebel 58-60 fallen die Walzen 53-55 durch die Schwerkraft einfach nach unten, bis die Hebel 58-60 an nicht näher dargestellten Anschlägen zur Anlage kommen.

In manchen Fällen ist es erwünscht, die Materialbahn in nur einem Nip zu behandeln. Hierfür ist, wie in Fig. 9c dargestellt, der Nip 64 vorgesehen.

Um eine derartige Behandlung erzielen zu können, ist der Hebel 58, an dem die Nachbarwalze 53 aufgehängt ist, in der Stuhlung 56 verriegelbar. Hierfür sind Mittel 69 vorgesehen, mit denen die Schwenkbewegung des Hebels 58 relativ zur Stuhlung 56 verhindert oder blokkiert werden kann. Im einfachsten Fall weisen die Mittel 69 einen Bolzen 70 auf, der durch den Hebel 58 und ein mit der Stuhlung 56 fest verbundenes Widerlager 71 geführt werden kann. In diesem Fall ist die Nachbarwalze 53 in der Stuhlung 56 festgelegt. Sie kann daher ihre Position relativ zur Oberwalze 51 nicht verändern. Um den Nip 64 dennoch öffnen zu können, aktiviert man bei der Oberwalze 51 die Mantelhubfunktion, so daß die Oberwalze 51, genauer gesagt ihr Mantel in Richtung des Doppelpfeiles 72 angehoben werden kann (durchgezogen dargestellt), um den Nip 64 zu öffnen, oder abzusenken, um den Nip 64 zu schließen (gestrichelt dargestellt).

Unabhängig davon, welchen Aufbau die Unterwalze 52 aufweist (mit Mantelhub oder ohne Mantelhub), muß zur Realisierung dieser Betriebsweise vorgesehen sein, daß die Oberwalze 51 des Kalanders 50 einen blockierbaren Mantelhub aufweist und die Beweglichkeit der Nachbarwalze 53 blockiert werden kann.

## Patentansprüche

1. Walze (1) mit einem Walzenmantel (7), der über einen Lagerring (9) drehbar auf einer undrehbar gehaltenen Achse (4) abgestützt ist, wobei der Lagerring (9) gegenüber der Achse (4) parallel zu einer Radialrichtung bewegbar ist, und mit einer Verriegelungseinrichtung, die eine radiale Hubbewegung frei gibt oder blockiert, **dadurch gekennzeichnet, daß** die Verriegelungseinrichtung ein verdrehbares Teil (9, 12) mit einer länglichen Öffnung (15; 22, 24) aufweist, das in einer ersten Drehstellung, in der die längliche Öffnung (15; 22, 24) parallel zur Hubbewegungsrichtung (16) ausgerichtet ist und eine zweite Drehstellung, in der die Hubbewegung blockiert ist, verdrehbar ist.

2. Walze nach Anspruch 1, **dadurch gekennzeichnet, daß** das verdrehbare Teil (9) durch den Lagerring gebildet oder mit ihm gemeinsam bewegbar ist.

3. Walze nach Anspruch 1 oder 2, **dadurch gekennzeichnet, daß** das verdrehbare Teil (9, 12) um die Rotationsachse des Walzenmantels (7) verdrehbar ist.

4. Walze nach einem der Ansprüche 1 bis 3, **dadurch gekennzeichnet, daß** die längliche Öffnung (24) an ihren Längskanten konkav gewölbte Abschnitte (23) aufweist, deren Krümmungsradius dem Radius (RA) der Achse (5) in diesem Bereich entspricht, wobei die Achse (5) im Bereich des verdrehbaren Teils (9) abgeflachte Abschnitte (17) aufweist, die sich parallel zur Bewegungsrichtung (16) erstrecken.

5. Walze nach Anspruch 4, **dadurch gekennzeichnet, daß** der Abstand zwischen den abgeflachten Abschnitten (17) genauso groß ist wie die lichte Breite der länglichen Öffnung (22, 24).

6. Walze nach Anspruch 4 oder 5, **dadurch gekennzeichnet, daß** auf den abgeflachten Abschnitten (17) Gleitstücke (18) mit einer ebenen Unterseite aufliegen, deren Oberseite (19) zumindest auf einem Teil der axialen Länge die gleiche Krümmung (RG) wie die Achsen (RA) im Bereich des verdrehbaren Teils (9) aufweisen.

7. Walze nach Anspruch 6, **dadurch gekennzeichnet, daß** die Gleitstücke (18) einen radial vorstehenden Vorsprung (20) mit mindestens einer Stützfläche aufweisen, die in Axialrichtung mit einer entsprechenden Gegenfläche am verdrehbaren Teil (9) zusammenwirkt.

8. Walze nach Anspruch 7, **dadurch gekennzeichnet, daß** der Vorsprung (20) in eine Innennut (21) am verdrehbaren Teil (9) eintaucht.

9. Walze nach Anspruch 7 oder 8, **dadurch gekennzeichnet, daß** das verdrehbare Teil (9) an der radialen Außenseite der Vorsprünge (20) abgestützt ist.

10. Walze nach einem der Ansprüche 1 bis 9, **dadurch gekennzeichnet, daß** die Walze (1) als Durchbiegungsausgleichswalze ausgebildet ist.

11. Walze nach einem der Ansprüche 1 bis 10, **dadurch gekennzeichnet, daß** die Achse (5) im Bereich des verdrehbaren Teils (9) einen verminderten Durchmesser aufweist.

12. Kalander (50) mit einer Walze (51) mit einem Walzenmantel (7), der über einen Lagerring (9) drehbar auf einer undrehbar gehaltenen Achse (4) abgestützt ist, wobei der Lagerring (9) gegenüber der Achse (4) parallel zu einer Radialrichtung bewegbar ist, und mit einer Verriegelungseinrichtung, die eine radiale Hubbewegung frei gibt oder blockiert, und mit einer Nachbarwalze (53), die mit der Walze einen Nip (64) bildet, sowie mit mindestens einer weiteren Walze (54), wobei die Nachbarwalze (53) und die weiteren Walzen (54, 55) in Pressenrichtung verlagerbar sind, **dadurch gekennzeichnet, daß** Mittel (69) vorgesehen sind, die die Verlagerbarkeit der Nachbarwalze (53) wahlweise blockieren oder freigeben und daß die Verriegelungseinrinchtung nach einem der Ansprüche 1 bis 11 ausgebildet ist.

13. Kalander nach Anspruch 12, **dadurch gekennzeichnet, daß** die Nachbarwalze (53) über einen Hebel (58) in einer Stuhlung (56) gelagert ist, wobei die Mittel (69) eine Schwenkbewegung des Hebels (58) relativ zur Stuhlung (56) blockieren.

14. Kalander nach Anspruch 12 oder 13, **dadurch gekennzeichnet, daß** die Mittel (69) eine Überlastsicherung (70) aufweisen.

## Claims

1. Roll (1) having a roll shell (7), which is supported by a bearing ring (9) such that it can rotate on an axle (4) held such that it cannot rotate, it being possible for the bearing ring (9) to be moved with respect to the axle (4) parallel to a radial direction, and having a locking device which releases or blocks a radial reciprocating movement, **characterized in that** the locking device has a rotatable part (9, 12) with an elongated opening (15; 22, 24) which can be rotated into a first rotary position, in which the elongated opening (15; 22, 24) is aligned parallel to the direction (16) of the reciprocating movement, and a second rotary position, in which the reciprocating movement is blocked.

2. Roll according to Claim 1, **characterized in that** the rotatable part (9) is formed by the bearing ring or can be moved together with it.

3. Roll according to Claim 1 or 2, **characterized in that** the rotatable part (9, 12) can be rotated about the axis of rotation of the roll shell (7).

4. Roll according to one of Claims 1 to 3, **characterized in that**, at its longitudinal edges, the elongated opening (24) has concavely curved sections (23) whose radius of curvature corresponds to the radius (RA) of the axle (5) in this region, the axle (5) having, in the region of the rotatable part (9), flattened sections (17) which extend parallel to the direction of movement (16).

5. Roll according to Claim 4, **characterized in that** the distance between the flattened sections (17) is as large as the clear width of the elongated opening (22, 24).

6. Roll according to Claim 4 or 5, **characterized in that** sliding pieces (18) with a flat underside rest on the flattened sections (17), their upper side (19) having, in at least one part of the axial length, the same curvature (RG) as the axle (RA) in the region of the rotatable part (9).

7. Roll according to Claim 6, **characterized in that** the sliding pieces (18) have a radially protruding projection (20) with at least one supporting surface which interacts in the axial direction with a corresponding opposing surface on the rotatable part (9).

8. Roll according to Claim 7, **characterized in that** the projection (20) penetrates an internal groove (21) on the rotatable part (9).

9. Roll according to Claim 7 or 8, **characterized in that** the rotatable part (9) is supported on the radial outer side of the projections (20).

10. Roll according to one of Claims 1 to 9, **characterized in that** the roll (1) is constructed as a controlled deflection roll.

11. Roll according to one of Claims 1 to 10, **characterized in that** the axle (5) has a reduced diameter in the region of the rotatable part (9).

12. Calender (50) having a roll (51) with a roll shell (7) which is supported by a bearing ring (9) such that it can rotate on an axle (4) held such that it cannot rotate, it being possible for the bearing ring (9) to be moved with respect to the axle (4) parallel to a radial direction, and having a locking device which releases or blocks a radial reciprocating movement, and having a neighbouring roll (53) which forms a nip (64) with the roll, and having at least one further roll (54), it being possible for the neighbouring roll (53) and the further rolls (54, 55) to be displaced in the pressing direction, **characterized in that** means (69) are provided which optionally block or release the ability of the neighbouring roll (53) to be displaced, and **in that** the locking device is constructed in accordance with one of Claims 1 to 11.

13. Calender according to Claim 12, **characterized in that** the neighbouring roll (53) is mounted in a frame (56) via a lever (58), the means (69) blocking a pivoting movement of the lever (58) relative to the frame (56).

14. Calender according to Claim 12 or 13, **characterized in that** the means (69) have an overload safeguard (70).

## Revendications

1. Rouleau (1) présentant une chemise de rouleau (7) qui s'appuie par l'intermédiaire d'une bague de roulement (9) de manière à pouvoir tourner sur un axe (4) maintenu sans pouvoir tourner, la bague de roulement (9) étant mobile par rapport à l'axe (4) parallèlement à un sens radial, et un dispositif de verrouillage qui libère ou bloque un mouvement de course radial, **caractérisé en ce que** le dispositif de verrouillage présente une pièce rotative (9, 12) à ouverture allongée (15 ; 22, 24) qui peut être tournée dans une première position de rotation dans laquelle l'ouverture allongée (15 ; 22, 24) est orientée parallèlement au sens de mouvement de course (16), et dans une deuxième position de rotation dans laquelle le mouvement de course est bloqué.

2. Rouleau selon la revendication 1, **caractérisé en ce que** la pièce rotative (9) est constituée par la bague de roulement ou est mobile avec cette dernière.

3. Rouleau selon la revendication 1 ou 2, **caractérisé en ce que** la pièce rotative (9, 12) peut être tournée autour de l'axe de rotation de la chemise du rouleau (7).

4. Rouleau selon l'une quelconque des revendications 1 à 3, **caractérisé en ce que** l'ouverture allongée (24) présente sur ses arêtes longitudinales des sections bombées concaves (23) dont le rayon de courbure correspond au rayon (RA) de l'axe (5) dans cette zone, l'axe (5) présentant, au niveau de la pièce rotative (9), des sections aplaties (17) qui s'étendent parallèlement au sens de mouvement (16).

5. Rouleau selon la revendication 4, **caractérisé en ce que** la distance entre les sections aplaties (17) est égale à la largeur intérieure de l'ouverture allongée (22, 24).

6. Rouleau selon la revendication 4 ou 5, **caractérisé en ce que** reposent sur les sections aplaties (17) des coulisseaux (18) à face inférieure plane dont la face supérieure (19) présente au moins sur une partie de la longueur axiale la même courbure (RG) que les axes (RA) au niveau de la pièce rotative (9).

7. Rouleau selon la revendication 6, **caractérisé en ce que** les coulisseaux (18) présentent une saillie en proéminence radiale (20) comportant au moins une surface d'appui qui coopère dans le sens axial avec une contre-surface correspondante sur la pièce rotative (9).

8. Rouleau selon la revendication 7, **caractérisé en ce que** la saillie (20) plonge dans une rainure interne (21) de la pièce rotative (9).

9. Rouleau selon la revendication 7 ou 8, **caractérisé en ce que** la pièce rotative (9) s'appuie sur le côté extérieur radial des saillies (20).

10. Rouleau selon l'une quelconque des revendications 1 à 9, **caractérisé en ce que** le rouleau (1) est conçu sous forme d'un rouleau à équilibrage par flexion.

11. Rouleau selon l'une quelconque des revendications 1 à 10, **caractérisé en ce que** l'axe (5) présente au niveau de la pièce rotative (9) un diamètre réduit.

12. Calandre (50) comportant un rouleau (51) présentant une chemise de rouleau (7) qui s'appuie par l'intermédiaire d'une bague de roulement (9) de manière à pouvoir tourner sur un axe (4) maintenu sans pouvoir tourner, la bague de roulement (9) étant mobile par rapport à l'axe (4) parallèlement à un sens radial, et un dispositif de verrouillage qui libère ou bloque un mouvement de course radiale, et un rouleau accolé (53) qui constitue avec le rouleau un écartement (64), ainsi qu'au moins un autre rouleau (54), le rouleau accolé (53) et les autres rouleaux (54, 55) étant déplaçables dans le sens de la presse, **caractérisée en ce que** sont prévus des moyens (69) qui au choix bloquent ou libèrent la possibilité de décalage du rouleau accolé (53) et **en ce que** le dispositif de verrouillage est conçu selon l'une des revendications 1 à 11.

13. Calandre selon la revendication 12, **caractérisée en ce que** le rouleau accolé (53) est logé par l'intermédiaire d'un levier (58) dans un siège (56), les moyens (69) bloquant un mouvement de pivotement du levier (58) par rapport au siège (56).

14. Calandre selon la revendication 12 ou 13, **caractérisée en ce que** les moyens (69) comportent une sécurité contre la surcharge (70).
